# DEMANDE DE BREVET EUROPEEN

(11) **EP 3 337 091 A1**
(43) Date de publication de la demande: **20.06.2018**
(21) Numéro de dépôt: 17202619.7
(22) Date de dépôt: 20.11.2017
(51) Int. Cl.: H04L 9/32, G06Q 20/40

(54) **TRACABILITE D'UNE CHAINE DE TRAITEMENTS MULTI-ACTEURS PAR CHAINE DE BLOCS, PERMETTANT AU MOINS DEUX NIVEAUX DE CONFIANCE AUX INFORMATIONS STOCKÉES**

(30) Priorité: 16.12.2016 FR 1662590
(71) Demandeur: Bull SAS, 78340 Les Clayes-sous-Bois (FR)
(72) Inventeur: PIRON, Charles, 69006 LYON (FR); DOMINGOS, Thomas, 69006 LYON (FR); PEGUET, Steve, 94600 CHOISY LE ROI (FR)
(74) Mandataire: Novagraaf Technologies

(57) **Abrégé**

L'invention concerne un système pour la traçabilité d'une chaîne de traitements effectués par plusieurs acteurs (201, 202, 203), comportant une base de données (100) pour stocker les informations générées pour chaque traitement de ladite chaîne, et dans laquelle chaque acteur peut, après obtention d'un droit d'accès à ladite base de données, ajouter un premier élément d'information (101, 103) signé au moyen d'un certificat obtenu d'un dispositif matériel sécurisé (301, 302, 303) associé audit acteur ; et un second élément d'information (102, 104) signé par un certificat temporaire fourni par un serveur de sécurité (400), lesdits premier et second éléments étant associés à un horodatage au sein de ladite base de données.

## Description

### DOMAINE DE L'INVENTION

L'invention concerne la traçabilité d'une chaîne de traitement impliquant plusieurs acteurs, avec des phases de certifications. Elle peut notamment s'appliquer à la gestion de produits (chaîne manufacturée, chaîne agroalimentaire...), dans la logistique (chaîne logistique interne ou externe), mais aussi à la gestion d'actes juridiques (actes notariés, assurances, etc....), d'actes de ventes ou locatifs, curriculum vitae..., en somme, à toute chaîne traitement faisant intervenir plusieurs acteurs pour assurer la traçabilité du traitement.

### CONTEXTE DE L'INVENTION

Il existe des solutions informatiques permettant la traçabilité d'une chaîne de traitement.

En général, ces solutions sont issues de consortium privés ou publics basés sur une plateforme de gestion unique et centralisée. La confiance aux informations liées à la chaîne de traçabilité est assurée par cette plateforme centralisée.

Toutefois, dans certaines situations, il n'est pas possible ou souhaitable de disposer d'une plateforme centralisée. Dans le cas d'un processus multi-acteurs, c'est-à-dire impliquant des entités juridiques distinctes (plusieurs entreprises, etc.), il n'est pas toujours facile, juridiquement ou commercialement, de décider d'un acteur qui jouera le rôle central d'héberger la plateforme.

Il peut être envisagé de répartir la plateforme sur plusieurs sites, chacun associé à un acteur par exemple, mais les solutions proposées au moyen de base de données distribuées comme les bases NoSQL, par exemple Cassandra, restent basées sur une base de référence unique, appelée « maître », qui est répliquée et donc partagée sur chacun des sites.

Lorsque le nombre d'acteurs est important, un tel mécanisme basé sur la réplication devient trop complexe à mettre en oeuvre et voit ses performances fortement réduites.

En outre, la gouvernance de ce type d'architecture est unique : un acteur restant maître et les autres esclaves. De ce fait, l'acteur principal a un rôle différent de ceux des autres acteurs.

Il en ressort qu'il n'existe pas de solutions satisfaisantes permettant d'assurer la traçabilité d'une chaîne de traitement impliquant plusieurs acteurs et des phases de certifications.

### RESUME DE L'INVENTION

Le but de la présente invention est de fournir une solution palliant au moins partiellement les inconvénients précités.

Plus particulièrement, l'invention vise à fournir un procédé, ainsi qu'une plateforme associée, permettant d'établir dans un référentiel distribué et partagé, la confiance entre plusieurs acteurs, qui peuvent avoir des intérêts et des gouvernances propres. Elle vise également à gérer des phases de certifications et au moins deux niveaux d'informations : des informations certifiées et des informations non-certifiées, ces deux niveaux d'information pouvant être produit par un même acteur.

A cette fin, la présente invention propose un procédé de traçabilité d'une chaîne de traitements effectués par plusieurs acteurs, dans lequel les informations générées pour chaque traitement de ladite chaîne sont stockées au sein d'une base de données, et dans lequel chaque acteur peut, après obtention d'un droit d'accès à ladite base de données, ajouter un premier élément d'information signé au moyen d'un certificat obtenu d'un dispositif matériel sécurisé associé audit acteur ; et un second élément d'information signé par un certificat temporaire fourni par un serveur de sécurité, lesdits premier et second éléments étant associés à un horodatage au sein de ladite base de données.

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit dispositif matériel sécurisé appartient à une liste comprenant une carte à puce, une clefs USB, une bi-clef, une carte à puce, un microcontrôleur pour objet connecté, etc.
- ladite base de données est une chaîne de blocs;
- lesdits acteurs peuvent accéder aux informations stockées dans ladite base de données par une interface homme-machine.

Un autre objet de l'invention concerne une utilisation du procédé précédemment décrit pour la traçabilité d'un produit au sein d'une chaîne logistique, chaque étape de ladite chaîne logistique correspondant à un traitement de ladite chaîne de traitement.

Un autre objet de l'invention concerne une utilisation du procédé précédemment décrit pour la traçabilité d'un acte juridique, dans lequel chaque étape de la réalisation dudit acte correspond à un traitement de ladite chaîne de traitement.

Une autre objet de l'invention concerne un programme d'ordinateur comportant du code exécutable par un équipement numérique pour mettre en oeuvre le procédé précédemment décrit.

Un autre objet de l'invention concerne un système pour la traçabilité d'une chaîne de traitements effectués par plusieurs acteurs, comportant une base de données pour stocker les informations générées pour chaque traitement de ladite chaîne, et dans laquelle chaque acteur peut, après obtention d'un droit d'accès à ladite base de données, ajouter un premier élément d'information signé au moyen d'un certificat obtenu d'un dispositif matériel sécurisé associé audit acteur ; et un second élément d'information signé par un certificat temporaire fourni par un serveur de sécurité, lesdits premier et second éléments étant associés à un horodatage au sein de ladite base de données.

Suivant des modes de réalisation préférés, le système selon l'invention comprend une ou plusieurs des caractéristiques suivantes qui peuvent être utilisées séparément ou en combinaison partielle entre elles ou en combinaison totale entre elles :
- ladite base de données est une chaîne de blocs;
- le système comporte en outre une interface homme-machine permettant l'accès aux informations stockées dans ladite base de données, auxdits acteurs.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

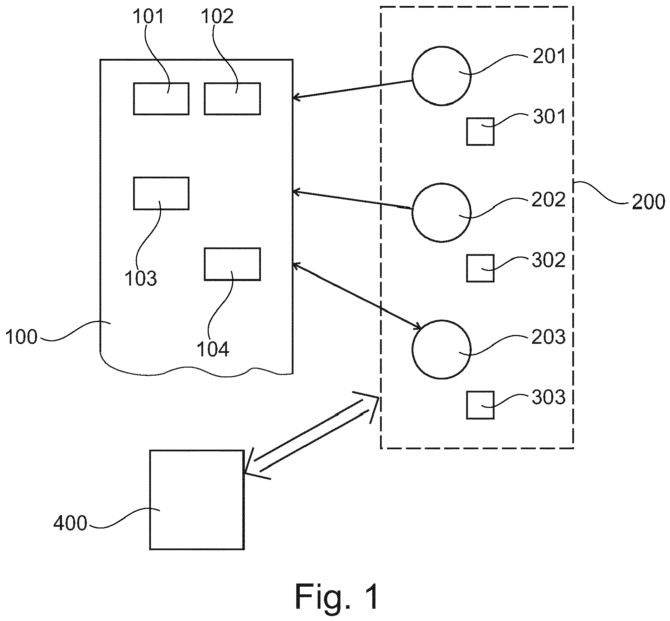

La figure 1 représente schématiquement un exemple de mise en oeuvre de l'invention.

### DESCRIPTION DETAILLEE DE L'INVENTION

L'invention peut être mise en oeuvre en utilisant la technologie des chaînes de blocs, car celle-ci permet nativement de répondre aux caractéristiques techniques de l'invention, notamment en termes de distribution de l'information et de confiance en cette information dans le cadre d'un contexte multi-acteurs. D'autres mises en oeuvre sont possibles et l'invention ne doit pas être comprise comme se limitant à cette technologie.

Une chaîne de bloc est une technologie de stockage et de transmission d'informations, pouvant fonctionner sans organe central de contrôle. Elle permet donc de réaliser une base de données dans laquelle les données sont réparties parmi les acteurs agissant sur cette base. Elle dispose toutefois des mécanismes de gestion permettant d'être assuré à tout moment d'un niveau de confiance suffisant en la non-falsification des données.

La technologie des chaînes de blocs est bien connue dans l'état de l'art, notamment comme technologie sous-jacente de la monnaie numérique « *bitcoin* ». On peut se référer à la littérature disponible sur internet, ou, par exemple aux demandes de brevets US2016/0028552, US2016/0275461... qui proposent des extensions de cette technologie.

Une chaîne de blocs repose sur la constitution de blocs de transaction, chaque bloc pouvant être lié au précédent par une clé de hachage. Créer ou modifier une transaction au sein d'un bloc ou un bloc entier implique donc un coût, celui du calcul de la clé. Mais falsifier un bloc nécessite de falsifier l'ensemble de la chaîne, de sorte que le coût total devient prohibitif et garantit un niveau de confiance en la non-falsification de l'ensemble d'une chaîne de blocs.

La figure 1 représente de façon schématique une mise en oeuvre de l'invention. L'élément 100 représente la base de données qui peut être mise en oeuvre par une chaîne de blocs.

Cette base de données est accessible par les différents acteurs 201, 202, 203 et d'une chaîne de traitements 200. Ces traitements peuvent être relatifs à la traçabilité d'un produit, d'un acte juridique ou de tout autre objet concret ou abstrait.

On verra ultérieurement l'exemple du traçage d'un bagage, le traçage d'un acte notarié, mais d'autres exemples d'applications sont envisageables, pour lesquels plusieurs acteurs doivent intervenir au long d'un processus concernant cet objet et pour lesquels on souhaite conserver une trace des traitements qu'il subit. Il peut par exemple s'agir de tracer les différentes localisations d'un bagage (départ du domicile du voyageur, enregistrement à l'aéroport, débarquement de l'avion, etc.), les différentes étapes d'un acte notarié (offre d'achat d'un bien immobilier, certificat établi par un prestataire technique, signature de l'acte de vente, etc.)

Les acteurs 201, 202, 203 représentent des entités juridiquement responsables. Celles-ci peuvent habiliter des entités, ou « certificateurs », à signer et écrire des éléments dans la chaîne de blocs en leur nom. Ces « certificateurs » peuvent être :
- Des personnes habilitées ;
- Des objets connectés habilités.

Dans la suite, il sera souvent fait référence au terme « acteur » pour évoquer l'entité agissante en leur nom.

Ces habilitations sont temporaires et de niveaux de confiance différents, c'est-à-dire, comme on le verra plus loin, correspondant à un premier type ou à un second type d'éléments d'information, en fonction de sa position dans la chaîne de traitement.

La chaîne de blocs 100 peut être mises en oeuvre de différentes façons. Elle permet aux différents acteurs de disposer du référentiel qu'elle contient, c'est-à-dire de l'état à un moment donné, des informations relatives à la chaîne de traitement. Elle peut être distribuée aux différents acteurs, notamment via un mécanise de type pair-à-pair (ou « *peer to peer* » en langue anglaise).

Selon l'invention, les acteurs doivent obtenir un droit d'accès avant de pouvoir accéder à la chaîne de blocs 100. Pour ce faire ils peuvent obtenir un certificat temporaire de la part d'un serveur de sécurité 400.

L'échange entre les acteurs 201, 202, 203 et le serveur de sécurité 400 peut fonctionner comme une infrastructure à clés publiques, ICP, ou « *Public Key Infrastructure* »*,* PKI, en langue anglaise. Une telle infrastructure permet de gérer le cycle de vie des certificats numériques, ou certificats électroniques, qui ont une durée de vie temporaire dans le cadre de l'invention.

Une fois obtenu un certificat lui donnant accès à la chaîne de blocs 100, les acteurs 201, 202, 203 peuvent y ajouter des éléments d'information 101, 102, 103, 104, typiquement par l'intermédiaire d'un certificateur respectivement agissant pour leur compte.

On peut distinguer au moins deux types d'éléments d'information, chacun mettant en oeuvre un niveau de confiance nécessaire différent.

Un premier type d'éléments d'information correspond à un niveau de confiance souhaitée élevé. Afin de garantir ce niveau de confiance, ce premier type d'éléments d'information est signé au moyen d'un certificat obtenu d'un dispositif matériel sécurisé 301, 302, 303, associé à l'acteur, respectivement 201, 202, 203.

Par exemple, ce dispositif matériel sécurisé, ou élément de sécurisation, peut être une carte à puce qui a été préalablement fournie à l'acteur et contenant un tel certificat. Elle lui permet ainsi de garantir être l'auteur des éléments d'information ajoutés par l'acteur. Il peut également s'agir d'une clef USB, d'une bi-clefs, d'un microcontrôleur pour objet connecté, etc.

La confiance en l'élément d'information est alors assurée par la confiance que les autres acteurs de la chaîne de traitement portent en cet acteur, et par cette garantie qu'il en est bien l'auteur.

Typiquement, cet élément d'information peut répondre à une exigence légale : par exemple, il s'agit d'une certification établie par un prestataire spécialisé, répondant à des exigences de normalisation et/ou juridique.

En outre, les acteurs peuvent ajouter des éléments d'information d'un second type, correspondant à un niveau de confiance moindre que le premier type. Ces acteurs peuvent être connus et certifiés, c'est-à-dire disposant de certificats et de moyen de sécurité pour inscrire des éléments du premier type ou bien être inconnus, c'est-à-dire, seulement habilité à inscrire des éléments du second type. Ces éléments d'information peuvent correspondre à des informations complémentaires, qui peuvent par exemple véhiculer un contenu informatif intéressant pour les différents acteurs, mais sans exigence normative ou légale.

Pour ce faire, ces éléments d'information peuvent être signés par un certificat temporaire fourni par le serveur de sécurité 400

Un même acteur peut ajouter à la fois un élément d'information du premier type et un élément d'information du second type. Il peut également ajouter plusieurs éléments d'un même type.

Dans l'exemple de la figure 1, l'acteur 201 ajoute un élément d'information 101 d'un premier type, et un élément d'information 102 d'un second type. L'acteur 202 ajoute un élément d'information 103 d'un premier type. L'acteur 203 ajoute un élément d'information 104 d'un second type.

Chaque ajout d'un élément d'information par un acteur de la chaîne donne lieu à un horodatage par un système ou une application certifiée et de confiance, de l'ajout qui est stocké dans la base de données 100 en association auxdits éléments d'information.

Cet horodatage de confiance permet notamment d'ordonner les éléments d'information entre eux, en fonction des événements ayant provoqué leur ajout dans la base. Cela permet par exemple de créer ou contrôler des liens sémantiques entre les éléments, typiquement si un élément doit être ajouté obligatoire avant un autre.

Selon un mode de réalisation de l'invention, un portail est prévu, sous la forme d'une interface homme-machine, afin de permettre l'accès aux éléments d'informations 101, 102, 103, 104 stockés dans la base de données 100.

Afin de rendre l'invention plus claire, il est possible de décrire quelques cas d'utilisation concrets.

On peut citer notamment le cas d'une utilisation de l'invention pour la traçabilité d'une chaîne liée à une transaction immobilière. Une telle transaction met en jeu plusieurs acteurs parmi lesquels, typiquement, un vendeur, un acheteur, un notaire et un ou plusieurs prestataires spécialisés.

Ces prestataires spécialisés peuvent être en charge d'établir des diagnostics, ainsi que notamment imposés par les législations nationales, ou dans un but commercial. Il peut s'agir de diagnostics assurant de la surface réel du bien immobilier, de son respect des normes sanitaires (absence de plomb, d'amiante, etc.), de son isolation thermique, etc.

Une fois leur travail de diagnostic effectué, les prestataires spécialisés peuvent ajouter leur rapport de diagnostic (ou de certification), sous la forme d'un élément d'information de premier type, c'est-à-dire signé par une carte à puce ou tout autre dispositif matériel de sécurité qui leur a été mis à disposition.

De la sorte, chaque autre acteur de la chaîne (acheteur, notaire...) de la transaction immobilière, peut avoir connaissance du rapport de diagnostic et peut y porter un niveau de confiance important, puisqu'il y a assurance qu'il ait bien été ajouté par un prestataire habilité.

Ce même prestataire peut également ajouter des informations complémentaires, qui peuvent prendre la forme d'un élément d'information du second type, c'est-à-dire simplement signé par un certificat temporaire fourni par le serveur de sécurité 400. Ces informations complémentaires peuvent ne pas être nécessaires à la transaction immobilière, et notamment pas utile au notaire par exemple, mais peuvent être des conseils pour améliorer le bien immobilier, une offre commerciale en ce sens, etc., comme par exemple l'exposition du bien, les améliorations à porter sur l'isolation ou le niveau sonore moyen observé durant le diagnostic.

On comprend que dans un tel contexte de transaction immobilière, deux niveaux de confiance sont intéressants afin de prendre en compte les éléments certifiant et/ou légaux, et les éléments informatifs ou commerciaux, dans la mesure où la falsification a des conséquences distinctes sur les plans commerciaux et juridiques.

L'horodatage de chaque ajout d'élément d'information permet de gérer les enchaînements entre les événements associés : ainsi les diagnostics doivent nécessairement être datés avant la signature du contrat d'achat-vente du bien immobilier. La signature du contrat peut également donner lieu à l'ajout d'un élément d'informations contenant tout ou partie du contrat, par le notaire.

Une autre utilisation de l'invention peut concerner la traçabilité d'un produit au sein d'une chaîne logistique. Différents produits peuvent devoir suivre un cycle, pour lequel chaque étape peut donner lieu à un marquage afin d'en tracer le parcours dans ce cycle.

Un premier exemple peut consister à suivre un produit agroalimentaire et d'ainsi pouvoir gérer, de façon décentralisée, les différentes étapes de certifications.

Un autre exemple peut consister à suivre un bagage lors d'un transport en avion. Par exemple, la déclaration du bagage, lors de l'achat du billet par le voyageur, ou en amont de son voyage, donne lieu à l'ajout d'un premier élément d'information dans la base de données 100. Cet ajout peut être effectué depuis un équipement situé chez le voyageur ou chez un organisateur de voyages, ou un système d'organisation de voyage.

L'enregistrement à l'aéroport de départ peut donner lieu à l'ajout d'un deuxième élément d'information dans la base de données. A l'aéroport d'arrivée, le débarquement du bagage peut donner lieu à l'ajout d'un troisième élément d'information, et sa réception par le voyageur peut donner lieu à l'ajout d'un quatrième élément d'informations dans la base de données, tout comme l'arrivée du bagage et du voyageur à l'hôtel de destination assurera au voyagiste la traçabilité de l'arrivée du voyageur et de son bien.

Comme il a été vu précédemment, cette base de données 100 peut être mise en oeuvre par une chaîne de blocs.

La granularité des blocs peut dépendre du domaine d'application de l'invention, et de choix opérationnels. Par exemple, chaque acteur peut ajouter un bloc à la chaîne, et y ajouter des éléments d'information, de premier et/ou deuxième types. Également, il est possible de définir des blocs journaliers, au sein desquels les différents acteurs peuvent venir ajouter les éléments d'informations (de premier et/ou deuxième types), comme autant de transactions.

Bien entendu, la présente invention n'est pas limitée aux exemples et aux modes de réalisation décrits et représentés, mais elle est susceptible de nombreuses variantes accessibles à l'homme de l'art.

## Revendications

1. Procédé de traçabilité d'une chaîne de traitements effectués par plusieurs acteurs (201, 202, 203), dans lequel les informations générées pour chaque traitement de ladite chaîne sont stockées au sein d'une base de données (100), et dans lequel chaque acteur peut, après obtention d'un droit d'accès à ladite base de données, ajouter un premier élément d'information (101, 103) signé au moyen d'un certificat obtenu d'un dispositif matériel sécurisé (301, 302, 303) associé audit acteur ; et un second élément d'information (102, 104) signé par un certificat temporaire fourni par un serveur de sécurité (400), lesdits premier et second éléments étant associés à un horodatage au sein de ladite base de données.

2. Procédé selon la revendication précédente, dans lequel ledit dispositif matériel sécurisé appartient à une liste comprenant une carte à puce, une clefs USB, une bi-clef, une carte à puce, un microcontrôleur pour objet connecté.

3. Procédé selon l'une des revendications précédentes dans lequel ladite base de données est une chaîne de blocs.

4. Procédé selon l'une des revendications précédentes, dans lequel lesdits acteurs peuvent accéder aux informations stockées dans ladite base de données par une interface homme-machine.

5. Utilisation du procédé selon l'une des revendications précédentes pour la traçabilité d'un produit au sein d'une chaîne logistique, chaque étape de ladite chaîne logistique correspondant à un traitement de ladite chaîne de traitement.

6. Utilisation du procédé selon l'une des revendications 1 à 3, pour la traçabilité d'un acte juridique, dans lequel chaque étape de la réalisation dudit acte correspond à un traitement de ladite chaîne de traitement.

7. Programme d'ordinateur comportant du code exécutable par un équipement numérique pour mettre en oeuvre le procédé selon l'une des revendications précédentes.

8. Système pour la traçabilité d'une chaîne de traitements effectués par plusieurs acteurs (201, 202, 203), comportant une base de données (100) pour stocker les informations générées pour chaque traitement de ladite chaîne, et dans laquelle chaque acteur peut, après obtention d'un droit d'accès à ladite base de données, ajouter un premier élément d'information (101, 103) signé au moyen d'un certificat obtenu d'un dispositif matériel sécurisé (301, 302, 303) associé audit acteur ; et un second élément d'information (102, 104) signé par un certificat temporaire fourni par un serveur de sécurité (400), lesdits premier et second éléments étant associés à un horodatage au sein de ladite base de données.

9. Système selon la revendication précédente dans lequel ladite base de données est une chaîne de blocs.

10. Système selon l'une des revendications 8 ou 9 comportant en outre une interface homme-machine permettant l'accès aux informations stockées dans ladite base de données, auxdits acteurs.
